# DEMANDE DE BREVET EUROPEEN

(11) **EP 1 400 404 A1**
(43) Date de publication de la demande: **24.03.2004**
(21) Numéro de dépôt: 03292244.5
(22) Date de dépôt: 11.09.2003
(51) Int. Cl.: B60Q 1/04, B60Q 1/00

(54) **Projecteur de véhicule automobile comportant des moyens perfectionnés d'absorption des chocs**

(30) Priorité: 20.09.2002 FR 0211707
(71) Demandeur: VALEO VISION, 93012 Bobigny Cédex (FR)
(72) Inventeur: Arlon, Philippe, 77330 Ozoir la Ferriere (FR)
(74) Mandataire: Renous Chan, Véronique

(57) **Abrégé**

L'invention concerne un projecteur de véhicule automobile comportant un boîtier (2) renfermant une source lumineuse et sur lequel est montée une glace (3) de protection apte à transmettre la lumière émise par la source.

Ce projecteur comporte en outre un film (6) transparent plaqué sur au moins une partie de l'une au moins des faces interne (4) ou externe (5) de la glace (3), et apte, en cas de choc subi par le projecteur (1), à absorber au moins une partie de l'énergie du choc et/ou à retenir au moins une partie des éclats de la glace (3).

## Description

La présente invention concerne un projecteur de véhicule automobile qui comporte un boîtier renfermant une source lumineuse et sur lequel est montée une glace de protection apte à transmettre la lumière émise par la source.

Par leur localisation, les projecteurs font partie des pièces les plus exposées lors d'un choc du véhicule avec un obstacle et jouent donc un grand rôle dans la sécurité passive des véhicules. A ce titre, la conception d'un projecteur doit répondre à de nombreuses préoccupations des constructeurs.

D'abord, limiter les dégâts subis par le projecteur, non seulement pour des raisons de coûts, mais également pour assurer, autant que possible, un fonctionnement même limité du projecteur après le choc.

C'est essentiellement dans cette perspective qu'a été conçu le projecteur ayant fait l'objet de la demande de brevet français déposée par la demanderesse et publiée sous le numéro FR-2 703 961.

Ensuite, éviter si possible, ou tout du moins limiter, les blessures subies par un piéton en cas de choc avec le projecteur lors d'un accident.

Dans le cas d'un piéton adulte de taille moyenne, et compte tenu de la localisation habituelle des projecteurs sur le véhicule, c'est principalement le bassin qui vient heurter le projecteur.

Dans le cas d'un piéton enfant, c'est sa tête qui vient heurter le projecteur.

Dans un cas comme dans l'autre, les dommages peuvent être conséquents, même à vitesse réduite (inférieure à 40 km/h).

Aussi a-t-on vu apparaître, depuis un certain temps déjà, de nombreuses solutions technologiques visant à permettre l'absorption par le projecteur d'une partie au moins de l'énergie du choc.

L'on pourra notamment se référer au brevet français N° FR-2 501 334, ou à son équivalent américain N° US-4,475,148.

Si ce type de projecteur a pu donner satisfaction par le passé, la sécurité qu'il garantit au piéton paraît toutefois pouvoir encore être améliorée. En particulier, l'on note encore de nombreuses lésions en cas de choc, même à faible vitesse, notamment par coupure avec des éclats de la glace brisée.

En général, les solutions technologiques proposées par le passé imposent de profondes modifications structurelles du projecteur, avec des conséquences néfastes en termes d'encombrement et de coût.

De nouveaux standards, définis notamment par l'EEVC (European Enhanced Vehicle-Safety Committee) et par l'Euro NCAP (European New Car Assessment Programme), imposent des critères très exigeants en matière de sécurité passive.

L'invention vise à satisfaire notamment aux nouveaux standards et, en tout état de cause, à offrir une solution relativement simple, d'encombrement réduit, qui contribue à accroître la sécurité du piéton en cas de choc avec le véhicule.

A cet effet, l'invention propose, suivant un premier aspect, un projecteur de véhicule automobile comportant un boîtier renfermant une source lumineuse et sur lequel est montée une glace de protection apte à transmettre la lumière émise par la source, ce projecteur comportant en outre un film transparent plaqué sur au moins une partie de l'une au moins des faces interne ou externe de la glace, et apte, en cas de choc subi par le projecteur, à absorber au moins une partie de l'énergie du choc et/ou à retenir au moins une partie des éclats de la glace.

Par « projecteur », on entend ici tout dispositif d'éclairage et/ou de signalisation d'un véhicule automobile.

Il en résulte notamment, en cas de choc avec la tête du piéton, une réduction des lésions de la boîte crânienne lorsque le film assure l'absorption d'une partie au moins de l'énergie du choc, ce qui diminue la probabilité de traumatisme cérébral.

Par ailleurs, en retenant la tête du piéton, le film empêche celle-ci de venir heurter les composants internes tranchants du projecteur (masque, déflecteur, ampoules, etc.).

En outre, lorsque le film assure la rétention des éclats de la glace brisée, il permet une réduction des risques de lésions faciales ou crâniennes par coupure.

Le film peut s'étendre sur la face interne ou sur la face externe de la glace. Il est de préférence réalisé dans un matériau présentant des propriétés d'étirabilité, afin de pouvoir se déformer dans la mesure du possible sans se déchirer.

Suivant un mode de réalisation, le film est réalisé dans un matériau contenant du polycarbonate et/ou du polyuréthane. De telles matières garantissent en effet une bonne étirabilité et une grande résistance au déchirement. Quant à l'épaisseur du film, elle est par exemple comprise entre 0,1 et 0,4 mm.

Par ailleurs, le film peut être tant monocouche que multicouches.

Par exemple, l'une au moins des couches est apte, en cas de choc subi par le projecteur, à absorber au moins une partie de l'énergie du choc, tandis qu'une autre couche au moins est apte à retenir au moins une partie des éclats de la glace.

Plusieurs films peuvent être prévus, mono ou multicouches, dont l'un au moins est disposé sur la face interne de la glace tandis qu'un autre est disposé sur sa face externe.

Plusieurs films peuvent également être superposés.

Par exemple, l'un des films au moins est apte, en cas de choc subi par le projecteur, à absorber au moins une partie de l'énergie du choc, tandis qu'un autre film au moins est apte à retenir au moins une partie des éclats de la glace.

L'invention propose également, suivant un deuxième aspect, un procédé de fabrication d'un tel projecteur de véhicule automobile, procédé qui, outre une étape consistant à former une glace pour le projecteur, comporte une étape consistant à fixer sur l'une au moins des faces interne ou externe de la glace au moins un film transparent propre, en cas de choc subi par le projecteur, à absorber au moins une partie de l'énergie du choc et/ou à retenir au moins une partie des éclats de la glace.

Suivant un mode de réalisation, la formation de la glace et la fixation du film sont réalisées par bi-injection simultanée.

Suivant un autre mode de réalisation, la fixation du film est réalisée par surmoulage.

Suivant encore un autre mode de réalisation, le film est formé par injection, et sa fixation à la glace est réalisée par collage.

Suivant encore un autre mode de réalisation, le film est formé par application d'un liquide (par exemple par pistolétage) ou d'une pâte sur la glace.

L'invention sera mieux comprise à la lecture de la description qui va suivre, donnée uniquement à titre d'exemple et faite en se référant aux dessins annexés dans lesquels :
- la figure 1 est une vue d'élévation en coupe illustrant un projecteur - intact - de véhicule automobile comportant un boîtier sur lequel est montée une glace, suivant un premier mode de réalisation où un film étirable s'étend sur la face externe de la glace ;
- la figure 2 est une vue d'élévation en coupe du projecteur de la figure 1 après qu'il a subi un choc avec un obstacle ;
- la figure 3 est une vue similaire à la figure 1, suivant un mode de réalisation où un film étirable s'étend sur la face interne de la glace ;
- la figure 4 est une vue d'élévation en coupe du projecteur de la figure 3 après que celui-ci a subi un choc avec un obstacle.

L'invention concerne donc un projecteur conçu pour amortir le choc en cas d'impact d'un piéton contre le projecteur.

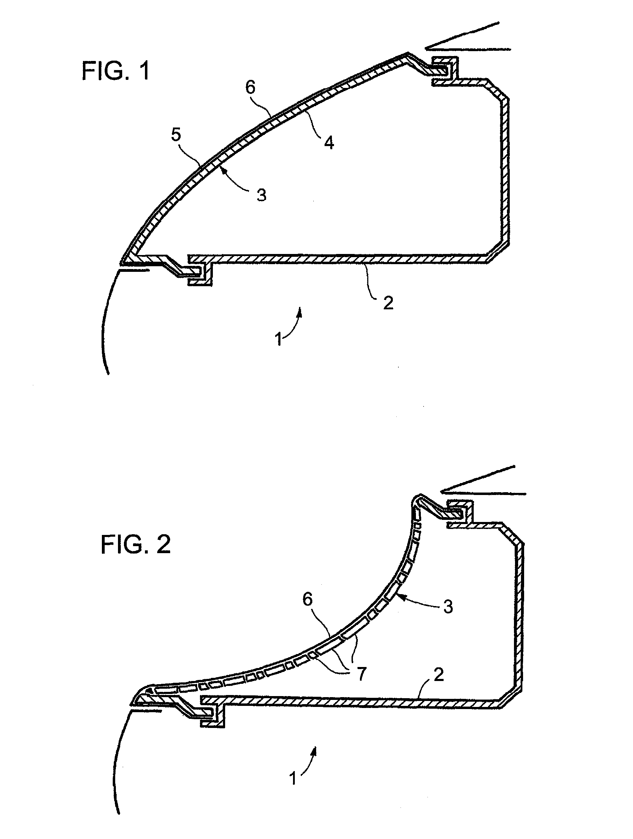

Sur la figure 1 est représenté un projecteur 1 de véhicule automobile. Ce projecteur 1 comporte un boîtier 2 qui est fixé à la structure du véhicule et qui renferme un certain nombre de composants internes non représentés, dont une source lumineuse.

Le projecteur 1 comporte en outre une glace 3 qui, montée sur le boîtier 2, vient fermer celui-ci à la manière d'un couvercle pour protéger notamment les composants internes du projecteur 1 tout en transmettant la lumière émise par la source lumineuse.

Cette glace 3 présente une face interne 4 tournée vers le boîtier 2, et une face externe 5 opposée tournée vers l'avant du véhicule. Elle peut être réalisée en verre - elle présente dans ce cas une épaisseur comprise entre 1 et 3 mm environ - ou dans une matière synthétique contenant du polycarbonate PC et/ou du polyuréthane PU - elle présente dans ce cas une épaisseur comprise entre 1 et 3 mm environ, de préférence de 2,5 mm environ.

Le projecteur 1 comporte en outre au moins un film 6 plaqué contre la glace 3. Ce film 6 est transparent, de sorte qu'il transmet la lumière émise par la source lumineuse.

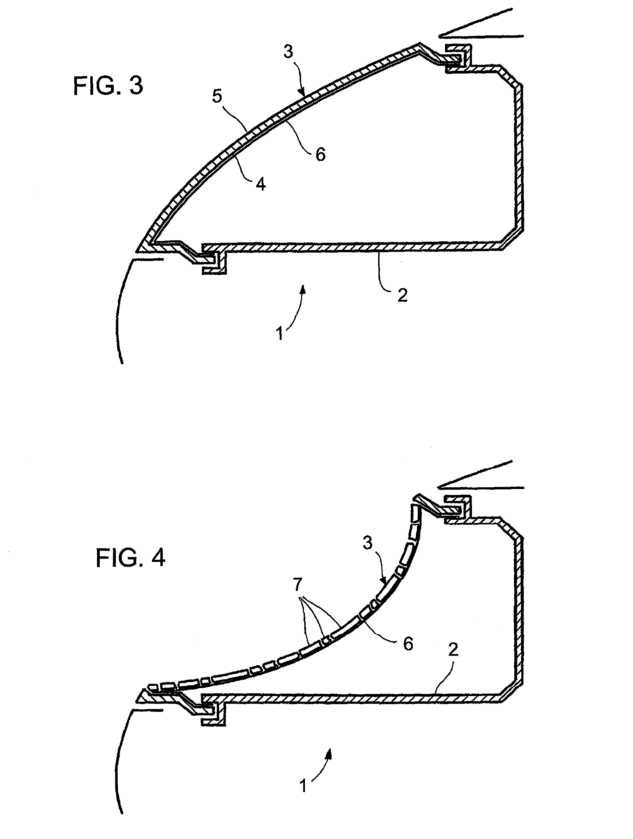

Le film 6 s'étend sur une partie au moins de la face externe 5 de la glace 3 ou de sa face interne 4. Dans l'exemple illustré sur la figure 1, le film 6 s'étend sur la totalité de la face externe 3 et, dans l'exemple illustré sur la figure 3, il s'étend sur la totalité de la face externe 4.

En cas de choc du projecteur 1 avec un obstacle tel qu'un piéton, l'obstacle vient heurter la glace 3, ce qui provoque l'enfoncement et l'éclatement de celle-ci en de multiples bris 7.

En se déformant, le film 6 assure au moins l'une des fonctions suivantes :
- il absorbe au moins une partie de l'énergie du choc, de préférence sans se déchirer ;
- il assure la rétention des bris de glace 7, lesquels restent pour la plupart collés à lui (figures 2, 4) ;
- il empêche l'obstacle de pénétrer dans le projecteur 1.

Lorsqu'un piéton vient heurter le projecteur 1 par sa tête, celle-ci est donc préservée des composants internes du projecteur 1, ce qui permet d'éviter de nombreuses lésions, notamment par coupure.

Les coupures par les bris de glace 7 sont également très limitées ou même évitées, surtout lorsque le film 6 s'étend sur la face externe 5 de la glace 3, comme représenté sur les figures 1 et 2.

Le film 6 permet en outre de préserver les composants internes du projecteur 1, ce qui limite les réparations ultérieures que doit subir le projecteur 1, du moins lorsqu'il n'est pas nécessaire de le remplacer.

Le film 6 est de préférence réalisé dans un matériau présentant de bonnes propriétés d'étirabilité, afin notamment d'accroître ses capacités d'absorption d'énergie.

Ainsi, le film 6 est par exemple réalisé dans un matériau contenant du polycarbonate ou du polyuréthane. Ces deux matières peuvent être combinées, mais le film 6 peut, bien entendu, être intégralement réalisé en polycarbonate (ou intégralement en polyuréthane).

Le film 6 présente une épaisseur comprise entre 0,1 et 0,4 mm environ, de préférence de 0,2 mm environ. En l'occurrence, il est monocouche mais, comme nous le verrons ci-après, il peut être multicouches.

Quoi qu'il en soit, divers procédés peuvent être employés pour la fabrication du projecteur 1.

En tout état de cause, après l'étape de formation de la glace 3, il est prévu une étape de fixation du film 6 sur celle-ci, sur l'une et/ou l'autre de ses faces 4, 5.

Ainsi, la formation de la glace 3 et du film 6 peuvent être réalisées par bi-injection simultanée, la fixation du film 6 par adhésion sur la glace 3 résultant directement de cette bi-injection.

Suivant un autre mode de réalisation, la formation de la glace 3 et du film 6 sont réalisées consécutivement, la réalisation et la fixation du film 6 étant conjointement réalisées par surmoulage.

Il est également possible de réaliser séparément la glace 3 et le film 6 par injection, puis de fixer le film 6 sur la glace 3 par collage.

Suivant encore un autre mode de réalisation, l'on peut, après avoir formé la glace 3, former le film 6 en appliquant sur la face 4, 5 concernée un liquide ou une pâte. Dans le cas d'un liquide, cette application peut être réalisée par pistolétage, ce qui assure une bonne rapidité d'exécution et garantit l'uniformité de l'application.

Diverses variantes de réalisation peuvent être prévues.

Ainsi, le film 6 peut être multicouches, les diverses couches superposées pouvant présenter des épaisseurs différentes, par exemple progressives pour permettre une absorption progressive de l'énergie du choc.

Les diverses couches peuvent remplir des fonctions distinctes. Ainsi, l'une des couches au moins peut être destinée à absorber au moins une partie de l'énergie d'un choc subi par le projecteur 1, tandis qu'une autre couche au moins peut être destinée à retenir au moins une partie des éclats de la glace 3 brisée au cours du choc. On peut aussi prévoir qu'une seule couche assume les deux fonctions de rétention d'éclats et absorption d'énergie.

Par ailleurs, deux films distincts au moins pourraient également être prévus. Ces films 6 pourraient être superposés sur une même face ou disposés sur des faces 4, 5 distinctes, chaque film 6 assurant par exemple une fonction propre parmi celles listées ci-dessus, afin d'augmenter encore les capacités d'absorption d'énergie du projecteur et limiter la projection de bris de glace 7 tant vers l'extérieur que vers l'intérieur du projecteur 1.

Bien entendu, il est également envisageable de combiner les diverses solutions qui viennent d'être présentées à titre d'exemple.

Ainsi, l'on pourrait combiner films mono et multicouches, sur une ou sur chaque face 4, 5 de la glace 3, et sur une partie seulement ou sur la totalité de la face 4, 5 concernée.

L'invention s'applique plus particulièrement aux glaces dites en plastique (notamment à base de PU et/ou de PC). Elle s'applique aussi à tout véhicule équipé de tels projecteurs, qui soit apte à protéger au mieux les piétons en cas de choc, et notamment apte à remplir les conditions du projet de directive européenne n° 70/156/EEC concernant le choc piéton.

## Revendications

1. Projecteur de véhicule automobile comportant un boîtier (2) renfermant une source lumineuse et sur lequel est montée une glace (3) de protection apte à transmettre la lumière émise par la source, **caractérisé en ce qu'**il comporte en outre un film (6) transparent plaqué sur au moins une partie de l'une au moins des faces interne (4) ou externe (5) de la glace (3), et apte, en cas de choc subi par le projecteur (1), à absorber au moins une partie de l'énergie du choc et/ou à retenir au moins une partie des éclats de la glace (3).

2. Projecteur selon la revendication 1, **caractérisé en ce que** le film (6) s'étend sur au moins une partie de la face interne (4) de la glace (3).

3. Projecteur selon la revendication 1, **caractérisé en ce que** le film (6) s'étend sur au moins une partie de la face externe (5) de la glace (3).

4. Projecteur selon l'une des revendications 1 à 3, **caractérisé en ce que** le film (6) est réalisé dans un matériau présentant des propriétés d'étirabilité.

5. Projecteur selon l'une des revendications 1 à 4, **caractérisé en ce que** le film (6) est réalisé dans un matériau contenant du polycarbonate et/ou du polyuréthane.

6. Projecteur selon l'une des revendications 1 à 5, **caractérisé en ce que** le film (6) présente une épaisseur comprise entre 0,1 et 0,4 mm environ.

7. Projecteur selon l'une des revendications 1 à 6, **caractérisé en ce que** le film (6) est monocouche ou multicouches.

8. Projecteur selon la revendication 7, **caractérisé en ce que** l'une au moins des couches du film (6) est apte, en cas de choc subi par le projecteur (1), à absorber au moins une partie de l'énergie du choc, et **en ce qu'**au moins une autre couche est apte à retenir au moins une partie des éclats de la glace (3).

9. Projecteur selon l'une des revendications 1 à 8, **caractérisé en ce qu'**il comporte plusieurs films (6) dont un au moins est disposé sur la face interne (4) de la glace (3) tandis qu'un autre est disposé sur sa face externe (5).

10. Projecteur selon l'une des revendications 1 à 9, **caractérisé en ce qu'**il comporte plusieurs films (6) superposés.

11. Projecteur selon l'une des revendications précédentes, **caractérisé en ce qu'**il est conçu pour amortir le choc en cas d'impact d'un piéton contre le projecteur.

12. Procédé de fabrication d'un projecteur (1) de véhicule automobile, qui comporte une étape consistant à former une glace (3) pour le projecteur (1), **caractérisé en ce qu'**il comporte une étape consistant à fixer sur une partie au moins de l'une au moins des faces interne (4) ou externe (5) de la glace (3) au moins un film (6) transparent propre, en cas de choc subi par le projecteur (1), à absorber au moins une partie de l'énergie du choc et/ou à retenir au moins une partie des éclats de la glace (3).

13. Procédé selon la revendication 11, **caractérisé en ce que** la formation de la glace (3) et la fixation du film (6) sont réalisées par bi-injection simultanée.

14. Procédé selon la revendication 11, **caractérisé en ce que** la fixation du film (6) est réalisée par surmoulage.

15. Procédé selon la revendication 11, **caractérisé en ce que** le film (6) est formé par injection, et **en ce que** sa fixation à la glace (3) est réalisée par collage.

16. Procédé selon la revendication 11, **caractérisé en ce que** le film (6) est formé par application d'un liquide ou d'une pâte sur la glace (3).

17. Procédé selon la revendication 15, **caractérisé en ce que** le film (6) est formé par application d'un liquide par pistolétage.
